# EUROPEAN PATENT APPLICATION

(11) **EP 4 819 176 A1**
(43) Date of publication of application: **07.10.2026**
(21) Application number: 24897150.9
(22) Date of filing: 22.10.2024
(51) Int. Cl.: H01G 4/32, C08J 5/18

(54) **CAPACITOR FILM, METHOD FOR PRODUCING SAME, CAPACITOR, AND FILM**

(30) Priority: 29.11.2023 JP 2023202125
(71) Applicant: Zeon Corporation, Tokyo 100-8246 (JP)
(72) Inventor: ARIURA Eito, Tokyo 100-8246 (JP)
(74) Representative: Maiwald GmbH
(86) International application number: PCT/JP2024/037621
(87) International publication number: WO 2025/115460

(57) **Abstract**

A film for a capacitor and a film contain a hydrogenated dicyclopentadiene ring-opened polymer that is crystalline and have a through direction crystal long period of 120 angstroms or less as determined by small-angle X-ray scattering.

## Description

### TECHNICAL FIELD

The present disclosure relates to a film for a capacitor and method of producing the same, a capacitor, and a film.

### BACKGROUND

A film capacitor, which is one type of capacitor, is a device that can store electrical charge and that has a structure in which dielectric films and metal layers are disposed alternately. There is demand for a dielectric film of a film capacitor to excel in terms of dielectric strength retention at high temperature, metal vapor deposition properties, formability, and so forth.

In response to this demand, a film for a capacitor has been proposed that contains a hydrogenated dicyclopentadiene ring-opened polymer that is crystalline and that has a heat shrinkage ratio of not less than 0.01% and not more than 1.0% when heated at 200°C for 10 minutes, a plane orientation factor of 0.01 or more, a density of 1.03 × 10⁶ g/m³ (1.03 g/cm³) or more, and a thickness of 15.0 µm or less (for example, refer to Patent Literature (PTL) 1).

Moreover, a film that has an edge direction long period of 7 nm to 12 nm and a peak full width at half maximum of 0.1 to 0.8 as determined by small-angle X-ray scattering has been studied as a biaxially oriented polyester film that can be used in the production of various types of shaped articles (for example, refer to PTL 2).

### CITATION LIST

### Patent Literature

PTL 1: WO2019/167682A1
PTL 2: JP2011-202156A

### SUMMARY

### (Technical Problem)

However, the conventional films described above leave room for even further improvement with regard to the value of dielectric breakdown strength under normal-temperature conditions and high-temperature conditions.

Accordingly, an object of the present disclosure is to provide a film for a capacitor that can improve the value of dielectric breakdown strength at normal temperature and high temperature.

### (Solution to Problem)

The inventor conducted diligent investigation with the aim of solving the problem set forth above. The inventor made a new discovery that it is possible to increase the value of dielectric breakdown strength at both normal temperature and high temperature when a film for a capacitor contains a crystalline hydrogenated dicyclopentadiene ring-opened polymer and when the crystal structure thereof is controlled such as to satisfy a prescribed attribute, and, in this manner, the inventor completed the present disclosure.

Specifically, with the aim of advantageously solving the problem set forth above, a presently disclosed film for a capacitor [1] comprises a hydrogenated dicyclopentadiene ring-opened polymer that is crystalline, wherein the film for a capacitor has a through direction crystal long period of 120 angstroms or less as determined by small-angle X-ray scattering. As a result of the film for a capacitor containing a crystalline hydrogenated dicyclopentadiene ring-opened polymer and having a through direction crystal long period of 120 angstroms or less as determined by small-angle X-ray scattering in this manner, the value of dielectric breakdown strength at normal temperature and high temperature can be improved.

Note that the phrase "hydrogenated dicyclopentadiene ring-opened polymer that is crystalline" as used in the present disclosure refers to a "hydrogenated dicyclopentadiene ring-opened polymer that has a melting point Tm (i.e., a hydrogenated dicyclopentadiene ring-opened polymer for which a melting point can be observed using a differential scanning calorimeter (DSC))".

Moreover, the "through direction crystal long period as determined by small-angle X-ray scattering" can be measured by a method described in the EXAMPLES section of the present specification.

[2] The film for a capacitor according to the foregoing [1] preferably has a rigid amorphous fraction of 3% or more. When the rigid amorphous fraction of the film for a capacitor is 3% or more, the value of dielectric breakdown strength, particularly at high temperature, can be even further increased.

Note that the "rigid amorphous fraction" of a film for a capacitor can be measured by a method described in the EXAMPLES section of the present specification.

[3] The film for a capacitor according to the foregoing [1] or [2] preferably has a dielectric breakdown strength at 150°C of 400 kV/mm or more.

Note that the "dielectric breakdown strength at 150°C" of a film for a capacitor is the dielectric breakdown strength of the film for a capacitor when the thickness thereof is set as 3 µm and can be measured by a method described in the EXAMPLES section of the present specification.

[4] The film for a capacitor according to any one of the foregoing [1] to [3] preferably has a plane orientation factor of 0.010 or more. When the plane orientation factor is 0.010 or more, electrical insulation of the film for a capacitor can be even further increased.

Note that the "plane orientation factor" of a film for a capacitor can be measured by a method described in the EXAMPLES section of the present specification.

[5] The film for a capacitor according to any one of the foregoing [1] to [4] may comprise silica particles as an anti-blocking agent.

Moreover, with the aim of advantageously solving the problem set forth above, [6] a presently disclosed method of producing a film for a capacitor is a method of producing the film for a capacitor according to any one of the foregoing [1] to [5], comprising performing stretching treatment of an unstretched film under conditions of a stretching temperature of not lower than a glass-transition temperature Tg of the hydrogenated dicyclopentadiene ring-opened polymer and not higher than a melting point Tm of the hydrogenated dicyclopentadiene ring-opened polymer and an area stretching ratio of not less than 1.5 times and not more than 20.0 times.

Through the method of producing a film for a capacitor set forth above, it is possible to efficiently produce a film for a capacitor having a high value of dielectric breakdown strength at normal temperature and high temperature.

[7] The method of producing a film for a capacitor according to the foregoing [6] preferably further comprises: performing heat treatment of a stretched film that has been stretched through the stretching treatment under conditions of a heating temperature of not lower than 150°C and not higher than 240°C and a heating time of not less than 0.05 minutes and not more than 600 minutes; and performing relaxation treatment of the stretched film that has been heated through the heat treatment under conditions of a relaxation temperature of not lower than 150°C and not higher than 240°C and a relaxation time of not less than 0.05 minutes and not more than 600 minutes and with a reduction ratio of film fixed width of more than 0% and not more than 20%.

Through a method of producing a film for a capacitor that includes these steps, it is possible to even more efficiently produce a film for a capacitor having a high value of dielectric breakdown strength at normal temperature and high temperature.

Note that the "reduction ratio of film fixed width" is the proportion by which a holding interval of the film is narrowed in the relaxation treatment.

Furthermore, with the aim of advantageously solving the problem set forth above, [8] a presently disclosed capacitor comprises the film for a capacitor according to any one of the foregoing [1] to [5]. This capacitor can operate stably at normal temperature and high temperature.

The present disclosure also provides [9] a film comprising a hydrogenated dicyclopentadiene ring-opened polymer that is crystalline, wherein the film has a through direction crystal long period of 120 angstroms or less as determined by small-angle X-ray scattering.

### (Advantageous Effect)

According to the present disclosure, it is possible to provide a film for a capacitor having a high value of dielectric breakdown strength at normal temperature and high temperature.

### DETAILED DESCRIPTION

The following provides a detailed description of the present disclosure through embodiments and illustrations. However, the present disclosure is not limited to the following embodiments and illustrations and can be implemented with any changes that do not deviate from the claims of the present disclosure and equivalents thereof.

### (Film for capacitor and film)

The presently disclosed film contains at least a hydrogenated dicyclopentadiene ring-opened polymer that is crystalline and may contain other components such as an anti-blocking agent as necessary. Moreover, among various applications, the presently disclosed film is, in particular, suitable as a film for a capacitor. The presently disclosed film for a capacitor contains at least a hydrogenated dicyclopentadiene ring-opened polymer that is crystalline and may contain other components such as an anti-blocking agent as necessary.

### <Crystalline hydrogenated dicyclopentadiene ring-opened polymer>

The crystalline hydrogenated dicyclopentadiene ring-opened polymer is a hydrogenated dicyclopentadiene ring-opened polymer with which a film-like shaped product having a melting point is obtained through stretching treatment, etc.

The term "crystalline hydrogenated dicyclopentadiene ring-opened polymer" as used in the present specification refers to a hydrogenated dicyclopentadiene ring-opened polymer that has a melting point Tm (i.e., for which a melting point can be observed using a differential scanning calorimeter (DSC)).

The melting point Tm of the hydrogenated dicyclopentadiene ring-opened polymer is not specifically limited but is preferably 200°C or higher, more preferably 220°C or higher, even more preferably 230°C or higher, and particularly preferably 250°C or higher, and is preferably 320°C or lower, more preferably 300°C or lower, even more preferably 290°C or lower, and particularly preferably 270°C or lower.

The dicyclopentadiene ring-opened polymer is a polymer in which the proportion of dicyclopentadiene-derived structural units relative to all structural units is normally 50 mass% or more, preferably 70 mass% or more, more preferably 90 mass% or more, even more preferably 95 mass% or more, and particularly preferably 100 mass%. No specific limitations are placed on structural units that can be included in the dicyclopentadiene ring-opened polymer other than being structural units derived from monomers that are copolymerizable with dicyclopentadienes, and examples thereof include structural units derived from monomers such as norbornenes, cycloolefins, and dienes.

The crystalline hydrogenated dicyclopentadiene ring-opened polymer may, for example, be a hydrogenated product of a ring-opened polymer of dicyclopentadiene having syndiotactic stereoregularity that is described in JP2006-52333A.

In the following description, a "ring-opened polymer of dicyclopentadiene having syndiotactic stereoregularity" is referred to as "polymer (α)" and a "hydrogenated product of polymer (α)" is referred to as "polymer (β)".

The glass-transition temperature Tg of the crystalline hydrogenated dicyclopentadiene ring-opened polymer is not specifically limited but, in general, is preferably 85°C or higher, more preferably 87°C or higher, even more preferably 90°C or higher, and particularly preferably 95°C or higher, and is preferably 170°C or lower, more preferably 150°C or lower, even more preferably 130°C or lower, and particularly preferably 105°C or lower.

### {Polymer (α)}

The polymer (α) is obtained through ring-opening polymerization of a dicyclopentadiene. Endo and exo stereoisomers exist for the used dicyclopentadiene. Either of the endo isomer and the exo isomer can be used as the dicyclopentadiene. One of the endo isomer and the exo isomer may be used individually, or an isomer mixture in which the endo isomer and the exo isomer are mixed in any proportions may be used as the dicyclopentadiene. In particular, it is preferable that the proportion of one of the endo isomer and the exo isomer is high and that either the endo isomer or the exo isomer is a main component of the dicyclopentadiene from a viewpoint of increasing the crystallinity of the polymer (β) and obtaining even better heat resistance. For example, the proportion constituted by one of the endo isomer and the exo isomer is preferably more than 50 mass%, more preferably 80 mass% or more, even more preferably 90 mass% or more, further preferably 95 mass% or more, and particularly preferably 97 mass% or more. The proportion constituted by the endo isomer is preferably higher from a viewpoint of ease of synthesis.

The polymer (α) may include repeating units other than dicyclopentadiene-derived repeating units so long as the polymer (α) yields a polymer (β) that is crystalline. A polymer (α) such as described above can be produced through ring-opening copolymerization of dicyclopentadiene and a monomer other than dicyclopentadiene.

Examples of monomers other than dicyclopentadiene that can be used include polycyclic norbornene-based compounds other than dicyclopentadiene that include three or more rings, bicyclic norbornene-based compounds that do not include a ring structure fused to a norbornene skeleton, monocyclic olefins, cyclic dienes, and derivatives of any of these examples.

In a case in which any of these monomers is used, the amount thereof relative to all monomers is normally less than 50 mass%, preferably more than 0 mass% and not more than 20 mass%, and more preferably more than 0 mass% and not more than 10 mass%.

The types and amounts of a catalyst and other additives that are used in production of the polymer (α) can, for example, be in accordance with the description in WO2019/167682A1.

The crystallinity of the polymer (α) can normally be increased by increasing the degree of syndiotactic stereoregularity (proportion of racemo diads (meso/racemo ratio)) of the polymer (α).

The proportion of racemo diads in the polymer (α) (degree of syndiotactic stereoregularity) is not specifically limited but is preferably 51% or more, more preferably 60% or more, particularly preferably 65% or more, and most preferably 70% or more from a viewpoint of increasing the degree of stereoregularity. The proportion of racemo diads in the polymer (α) can be adjusted through selection of the type of ring-opening polymerization catalyst, for example.

The weight-average molecular weight (Mw) of the dicyclopentadiene ring-opened polymer is not specifically limited but is preferably 1,000 to 1,000,000, more preferably 2,000 to 500,000, and even more preferably 20,000 to 100,000. When a ring-opened polymer having a weight-average molecular weight such as described above is subjected to a hydrogenation reaction, a polymer (β) having excellent shaping processability can be obtained. The weight-average molecular weight of the ring-opened polymer can be adjusted by adjusting the additive amount of a molecular weight modifier that is used in polymerization, for example.

The molecular weight distribution (Mw/Mn) of the dicyclopentadiene ring-opened polymer is not specifically limited but is preferably 1.0 to 4.0, and more preferably 1.5 to 3.5. When a ring-opened polymer having a molecular weight distribution such as described above is subjected to a hydrogenation reaction, a polymer (β) having excellent shaping processability can be obtained. The molecular weight distribution of the ring-opened polymer can be adjusted through the addition method and the concentration of monomer(s) in the polymerization reaction.

The weight-average molecular weight (Mw) and the molecular weight distribution (Mw/Mn) of the dicyclopentadiene ring-opened polymer are polystyrene-equivalent values that are measured by gel permeation chromatography (GPC) with tetrahydrofuran as an eluent solvent.

### {Polymer (β)}

The polymer (β) can be produced by carrying out a hydrogenation reaction (hydrogenation reaction of carbon-carbon unsaturated bonds) with respect to the polymer (α).

The hydrogenation reaction of the polymer (α) can be carried out in accordance with a standard method by supplying hydrogen into a reaction system containing the polymer (α) in the presence of a hydrogenation catalyst, for example. By setting suitable reaction conditions in the hydrogenation reaction, the tacticity of the hydrogenated product does not normally change through the hydrogenation reaction. Such hydrogenation reaction conditions can, for example, be in accordance with the description in WO2019/167682A1.

The percentage hydrogenation (proportion of double bonds that are hydrogenated) in the hydrogenation reaction is not specifically limited but is preferably 70% or more, more preferably 80% or more, even more preferably 90% or more, particularly preferably 98% or more, and most preferably 99% or more. Heat resistance of the polymer (β) is further improved when the percentage hydrogenation is higher.

The percentage hydrogenation of a polymer can be calculated through ¹H-NMR measurement at 145°C with orthodichlorobenzene-d₄ as a solvent.

The syndiotactic stereoregularity of the polymer (α) that is subjected to the hydrogenation reaction is normally maintained in the polymer (β). Consequently, the polymer (β) has syndiotactic stereoregularity. The proportion of racemo diads in the polymer (β) (i.e., the proportion of racemo diads for repeating units obtained by hydrogenating a ring-opened polymer obtained through ring-opening polymerization of dicyclopentadiene) is not specifically limited so long as the polymer (β) is crystalline, but is preferably 51% or more, more preferably 60% or more, particularly preferably 65% or more, and most preferably 70% or more.

The hydrogenated product of the dicyclopentadiene ring-opened polymer has a higher melting point when the proportion of racemo diads is higher (i.e., when syndiotactic stereoregularity is higher).

Note that the proportion of racemo diads in the polymer (α) and the polymer (β) described above can be quantified based on spectral data obtained through measurement of a ¹³C-NMR spectrum. For example, the proportion of racemo diads can be determined by performing ¹³C-NMR measurement by an inverse-gated decoupling method at 200°C using a mixed solvent of 1,2,4-trichlorobenzene-d₃ and orthodichlorobenzene-d₄, and then determining the proportion of racemo diads from an intensity ratio of a signal at 43.35 ppm attributed to meso diads and a signal at 43.43 ppm attributed to racemo diads, with a peak at 127.5 ppm for orthodichlorobenzene-d₄ taken as a standard shift.

The polymer (β) is crystalline (i.e., a film-like shaped product having a melting point is obtained therewith). The temperature range for the melting point is not specifically limited but is normally 260°C to 275°C.

A polymer (β) having a melting point such as described above has an even better balance of formability and heat resistance. The melting point of the polymer (β) can be adjusted through adjustment of the degree of syndiotactic stereoregularity (proportion of racemo diads) of the polymer (β), through selection of the type of used monomer(s), and so forth.

When using the polymer (β), the polymer (β) may be used on its own or with other components added thereto.

### <Anti-blocking agent>

Examples of anti-blocking agents that can be added as other components include inorganic fine particles formed of inorganic substances such as silica; organic fine particles formed of organic substances such as acrylic cross-linked resins and melamine thermosetting resins; and organic-inorganic particles such as fatty acid metal salts (calcium stearate, etc.) and silicon-acrylic composite materials. One of these anti-blocking agents may be used individually, or two or more of these anti-blocking agents may be used in combination in a freely selected ratio.

Of these anti-blocking agents, inorganic fine particles such as silica particles and fatty acid metal salts are preferable in terms of lubricity, with silica particles being particularly preferable.

The number-average particle diameter of fine particles of the anti-blocking agent is not specifically limited but is preferably 0.01 µm or more in terms of lubricity, and is preferably 1.5 µm or less in terms of transparency.

### <Other components>

Examples of other components besides anti-blocking agents that can be used include antioxidants such as phenolic antioxidants, phosphoric antioxidants, and sulfuric antioxidants; light stabilizers such as hindered amine light stabilizers; waxes such as petroleum waxes, Fischer-Tropsch waxes, and polyalkylene waxes; nucleating agents such as sorbitol compounds, organophosphate metal salts, organocarboxylate metal salts, kaolin, and talc; fluorescent whitening agents such as diaminostilbene derivatives, coumarin derivatives, azole derivatives (for example, benzoxazole derivatives, benzotriazole derivatives, benzimidazole derivatives, and benzothiazole derivatives), carbazole derivatives, pyridine derivatives, naphthalic acid derivatives, and imidazolone derivatives; ultraviolet absorbers such as benzophenone ultraviolet absorbers, salicylic acid ultraviolet absorbers, and benzotriazole ultraviolet absorbers; inorganic fillers such as talc, silica (differing from silica particles serving as an anti-blocking agent described above), calcium carbonate, and glass fiber; colorants; flame retardants; flame retardant synergists; antistatic agents; plasticizers; near-infrared absorbers; lubricants; and fillers other than anti-blocking agents and polymer materials other than the polymer (β), such as soft polymers. One of such other components may be used individually, or two or more of such other components may be used in combination in a freely selected ratio.

In a case in which other components are used, the amounts of these other components can be set as appropriate depending on the object without any specific limitations other than that they do not impair the effects according to the present disclosure. The content of other components is not specifically limited but is preferably 5 parts by mass or less, more preferably 3 parts by mass or less, and particularly preferably 2 parts by mass or less per 100 parts by mass of the crystalline hydrogenated dicyclopentadiene ring-opened polymer.

The presently disclosed film for a capacitor and film are obtained by, for example, performing steps (stretching treatment step, heat treatment step, and relaxation treatment step) of the subsequently described method of producing a film for a capacitor with respect to a subsequently described unstretched film that is obtained through shaping of a composition containing the crystalline hydrogenated dicyclopentadiene ring-opened polymer described above by a commonly known shaping method.

The following describes the film for a capacitor in detail. Various attributes that are essential or preferable in the film for a capacitor are also applicable to the presently disclosed film for which the application thereof is not limited to a capacitor.

### <Through direction crystal long period determined by small-angle X-ray scattering>

The through direction crystal long period of the film for a capacitor as determined by small-angle X-ray scattering is required to be 120 angstroms or less. The through direction crystal long period as determined by small-angle X-ray scattering is a parameter that expresses the lamellar spacing in a lamellar structure of a crystalline polymer. More specifically, this crystal long period is the length of one period of a repeating unit when a crystal portion and an amorphous portion forming a lamellar structure are considered to be one repeating unit. The value of the through direction crystal long period as determined by small-angle X-ray scattering is influenced by the degree of crystallinity and the molecular weight of the polymer. A larger value for the "through direction crystal long period" measured for a certain crystalline polymer indicates a larger lamellar spacing in the lamellar structure of the crystalline polymer. Upon reference to the above description, this corresponds to a situation in which the sum of the thickness of the crystal portion and the thickness of the amorphous portion is large. A situation in which the "sum of the thickness of the crystal portion and the thickness of the amorphous portion is large" is considered to arise as a result of a low degree of crystallinity of the polymer and a low periodicity of the lamellar structure, for example. Accordingly, when the "through direction crystal long period" measured for the hydrogenated dicyclopentadiene ring-opened polymer that is a crystalline polymer forming the film in the present disclosure is "120 angstroms or less", it is presumed that the hydrogenated dicyclopentadiene ring-opened polymer has a suitably high degree of crystallinity and lamellar structure periodicity and that these structural features act to increase the value of dielectric breakdown strength under both normal-temperature and high-temperature conditions.

The value of the through direction crystal long period as determined by small-angle X-ray scattering is preferably 115 angstroms or less, and more preferably 105 angstroms or less from a viewpoint of even further increasing the value of dielectric breakdown strength. Note that the lower limit for the value of the through direction crystal long period as determined by small-angle X-ray scattering is not specifically limited but can be 80 angstroms or more.

### <Rigid amorphous fraction>

The rigid amorphous fraction of the film for a capacitor is preferably 3% or more, more preferably 10% or more, even more preferably 20% or more, and particularly preferably 30% or more. When the rigid amorphous fraction is not less than any of the lower limits set forth above, the value of dielectric breakdown strength of the film for a capacitor, and particularly the value of dielectric breakdown strength at high temperature, can be even further increased. Note that the upper limit for the rigid amorphous fraction of the film for a capacitor is not specifically limited but is preferably 50% or less from viewpoints such as processability.

### <Dielectric breakdown strength>

The dielectric breakdown strength at 150°C of the presently disclosed film for a capacitor is preferably 400 kV/mm or more, more preferably 425 kV/mm or more, even more preferably 450 kV/mm or more, and particularly preferably 485 kV/mm or more. Note that the upper limit for the dielectric breakdown strength at 150°C of the film for a capacitor is not specifically limited but can be 600 kV/mm or less, for example.

### <Plane orientation factor of film for capacitor>

The plane orientation factor of the film for a capacitor is preferably 0.010 or more, more preferably 0.011 or more, even more preferably 0.012 or more, and particularly preferably 0.013 or more in terms of surface uniformity of the film, and is preferably 0.030 or less, more preferably 0.025 or less, and particularly preferably 0.020 or less in terms of ease of acquisition.

When the plane orientation factor of the film for a capacitor is not less than any of the lower limits set forth above, a higher proportion of molecular chains are aligned in a plane of the film for a capacitor. When voltage is applied to the film for a capacitor, electrons align in a perpendicular direction relative to the direction of voltage application, electron flow is inhibited, and electrical insulation of the film for a capacitor improves. Moreover, when the plane orientation factor of the film for a capacitor is not less than any of the lower limits set forth above, vapor deposition properties of the film for a capacitor also improve because the uniformity of the surface (planar shape) of the film for a capacitor improves.

Note that the "plane orientation factor" can be measured by a method described in the EXAMPLES section of the present specification.

### <Thickness of film for capacitor>

The thickness of the film for a capacitor is not specifically limited so long as it is 15.0 µm or less, but is preferably 10.0 µm or less, more preferably 8.0 µm or less, particularly preferably 5.0 µm or less, and most preferably 4.0 µm or less in terms of improving flexibility, inhibiting wrinkling and misalignment during shaping, and reducing product size.

When the thickness of the film for a capacitor is 10.0 µm or less, flexibility improves, wrinkling and misalignment during shaping can be inhibited, and the size of a product in which the film for a capacitor is used can be reduced.

Note that the "thickness" can be measured by a method described in the EXAMPLES section of the present specification.

### <Capacitor>

The presently disclosed film for a capacitor is optionally subjected to surface treatment such as corona treatment or plasma treatment, is subsequently cut to a specific size, and is used as a material of a capacitor. The presently disclosed capacitor includes the presently disclosed film for a capacitor and, as a result, can operate stably with low tendency to suffer from short-circuiting during operation at normal temperature and high temperature.

The capacitor in which the presently disclosed film for a capacitor is used may be a stacked film capacitor in which films for a capacitor and metal layers are stacked alternately, a wound film capacitor in which a tape-shaped film for a capacitor and metal layer are wound up, or the like. The metal layer is not specifically limited and can be a metal layer that is typically adopted in capacitors.

Conventional and commonly known methods can be adopted without any specific limitations as methods by which these capacitors are produced.

### (Method of producing film for capacitor)

The presently disclosed method of producing a film for a capacitor (hereinafter, also referred to simply as the "production method") includes at least a stretching treatment step. In addition, the presently disclosed production method preferably includes a heat treatment step and a relaxation treatment step following the stretching treatment step and may include other steps as necessary.

In the following description, an "elongated" film is a film having a length that at least 5 times the width thereof, and is preferably a film having a length that is 10 times the width thereof, or more, and that, more specifically, is of a length such that it can be wound up as a roll for storage or transportation. Moreover, when the direction of an element is described as "parallel", "perpendicular", or "orthogonal", this is inclusive of a margin of error of within ±5°, for example, unless otherwise specified, so long as the effects according to the present disclosure are not lost. Furthermore, the longitudinal direction of an elongated film is normally parallel to the film conveyance direction in a production line.

### <Stretching treatment step>

The stretching treatment step is a step of performing stretching treatment of an unstretched film (web of film) with a specific stretching temperature and stretching ratio.

The method by which the unstretched film is stretched can be any stretching method without any specific limitations. For example, the method of stretching may be a uniaxial stretching method such as a method in which the unstretched film is uniaxially stretched in a longitudinal direction (longitudinal uniaxial stretching) or a method in which the unstretched film is uniaxially stretched in a transverse direction (transverse uniaxial stretching); a biaxial stretching method such as simultaneous biaxial stretching in which the unstretched film is stretched in a longitudinal direction and is simultaneously stretched in a transverse direction or sequential biaxial stretching in which the unstretched film is stretched in one of a longitudinal direction and a transverse direction and is subsequently stretched in the other of the longitudinal direction and the transverse direction; a method in which the unstretched film is stretched in an oblique direction that is not parallel to or perpendicular to a transverse direction (oblique stretching); or the like.

The longitudinal uniaxial stretching may be a stretching method that utilizes a difference in circumferential speeds between rolls, for example.

The transverse uniaxial stretching may be a stretching method in which a tenter stretching machine is used, for example.

The simultaneous biaxial stretching may be a stretching method in which, using a tenter stretching machine including a plurality of clips that can secure the unstretched film and that are provided in a moveable manner along guide rails, intervals are opened between the clips to stretch the unstretched film in a longitudinal direction while simultaneously stretching the unstretched film in a transverse direction through the angle of widening of the guide rails, for example.

The sequential biaxial stretching may be a stretching method in which a difference in circumferential speeds between rolls is utilized to stretch the unstretched film in a longitudinal direction, and then both ends of the unstretched film are held by clips and the unstretched film is stretched in a transverse direction by a tenter stretching machine, for example.

The oblique stretching may be a stretching method in which the unstretched film is continuously stretched in an oblique direction using a tenter stretching machine that can apply feeding force, pulling force, or take-up force to the unstretched film with different speeds between left and right in a longitudinal direction or a transverse direction, for example.

### [Unstretched film (web of film)]

The unstretched film is a film that contains a hydrogenated dicyclopentadiene ring-opened polymer and that has not been stretched. The unstretched film can be produced through a resin molding method such as injection molding, extrusion molding, press molding, inflation molding, blow molding, calendering, cast molding, or compression molding. Of these methods, production of the unstretched film by extrusion molding is preferable because the thickness of the unstretched film can be easily controlled.

In a case in which the unstretched film (web of film) is produced by extrusion molding, the production conditions in the extrusion molding are as follows. The cylinder temperature (molten resin temperature) is not specifically limited but is preferably not lower than 250°C and not higher than 330°C. The cast roll temperature is not specifically limited but is preferably not lower than 45°C and not higher than 160°C. The cooling roll temperature is not specifically limited but is preferably not lower than 25°C and not higher than 150°C.

The thickness of the unstretched film is not specifically limited but is preferably not less than 1 µm and not more than 1 mm.

### [Stretching temperature]

The stretching temperature is not specifically limited but, in terms of inhibiting film rupture during stretching and reduction of productivity due to clip detachment, is preferably not lower than the glass-transition temperature Tg of the hydrogenated dicyclopentadiene ring-opened polymer, and, more specifically, is preferably 95°C or higher, more preferably 100°C or higher, even more preferably 105°C or higher, and particularly preferably 110°C or higher. Moreover, in terms of enabling efficient production of a film for a capacitor having a small heat shrinkage ratio, the stretching temperature is preferably not higher than the melting point Tm of the hydrogenated dicyclopentadiene ring-opened polymer, and, more specifically, is preferably 140°C or lower, more preferably 130°C or lower, and particularly preferably 125°C or lower.

By setting the stretching temperature as not lower than the glass-transition temperature Tg of the hydrogenated dicyclopentadiene ring-opened polymer and not higher than the melting point Tm of the hydrogenated dicyclopentadiene ring-opened polymer, polymer molecules contained in the unstretched film can be caused to suitably align.

### [Stretching ratio]

The term "stretching ratio" encompasses MD (Machine Direction) and TD (Transverse Direction) stretching ratios. The direction of travel in which the unstretched film travels in a stretching device is taken to be MD, and a direction perpendicular to MD on a flat surface of the film is taken to be TD (Transverse Direction). The stretching ratio in MD (hereinafter, also referred to as the MD stretching ratio) is the value of a quotient obtained when the MD length after stretching is divided by the MD length before stretching. In other words, MD stretching ratio = MD length after stretching/MD length before stretching. In the obtained quotient, the second decimal place is discarded and a value to the first decimal place is adopted. In terms of enabling efficient production of a film for a capacitor, the MD stretching ratio is preferably 1.5 times or more, and more preferably 3.0 times or more, and is preferably 6.0 times or less, more preferably 5.5 times or less, even more preferably 5.0 times or less, and particularly preferably 4.0 times or less.

Note that the TD stretching ratio, in the same manner as the MD stretching ratio, is preferably 1.5 times or more, and more preferably 3.0 times or more, and is preferably 6.0 times or less, more preferably 5.5 times or less, even more preferably 5.0 times or less, and particularly preferably 4.0 times or less.

### [Area stretching ratio]

The term "area stretching ratio" as used in the present specification refers to the value of a product of MD stretching ratio × TD stretching ratio. In the obtained value of the product, the second decimal place is discarded and a value to the first decimal place is adopted. The area stretching ratio is preferably 1.5 times or more, more preferably 10.0 times or more, even more preferably 11.0 times or more, further preferably 13.0 times or more, and particularly preferably 15.0 times or more in terms of enabling efficient production of a film for a capacitor having high dielectric breakdown strength. Moreover, the area stretching ratio is preferably 20.0 times or less, and more preferably 16.0 times or less. When the area stretching ratio is not more than any of the upper limits set forth above, there is little occurrence of film rupturing, the uniformity of film thickness of an obtained film can be increased, and, as a result, a film for a capacitor having excellent productivity can be efficiently produced.

### [Stretching rate]

The stretching rate is not specifically limited but is preferably 100 mm/min or more, more preferably 150 mm/min or more, and particularly preferably 200 mm/min or more in terms of enabling efficient production of a film for a capacitor having high dielectric breakdown strength, and is preferably 30,000 mm/min or less, more preferably 20,000 mm/min or less, and particularly preferably 5,000 mm/min or less in terms of inhibiting film rupture during stretching and reduction of productivity due to clip detachment.

By subjecting the unstretched film to stretching treatment in this manner, a film for a capacitor having desired characteristics can be obtained. Moreover, performing stretching treatment of the unstretched film can inhibit formation of large crystal grains in the heat treatment step (crystallization step) to thereby inhibit whitening caused by these crystal grains, and, as a consequence, can increase the transparency of the film for a capacitor.

### <Heat treatment step>

The heat treatment step is a step of performing heat treatment of a stretched film that has been stretched through the stretching treatment step with a specific heating temperature and heating time.

Any commonly known method can be adopted as appropriate, without any specific limitations, as the method of heating in heat treatment of the stretched film obtained through the previously described stretching treatment.

The heating method may be a method in which the stretched film is secured to a stage and is subsequently heated using a heating device such as a heat treatment oven or an infrared heater.

### [Heating temperature]

The heating temperature is not specifically limited but is preferably 150°C or higher, more preferably 160°C or higher, even more preferably 170°C or higher, and particularly preferably 180°C or higher from a viewpoint of improving the value of dielectric breakdown strength at high temperature and a viewpoint of enabling efficient production of a film for a capacitor having a small heat shrinkage ratio, and is preferably 250°C or lower, more preferably 240°C or lower, and particularly preferably 230°C or lower in terms of enabling efficient production of a film having a small heat shrinkage ratio.

### [Heating time]

The heating time is not specifically limited but is preferably 3 seconds or more, more preferably 6 seconds or more, even more preferably 12 seconds or more, further preferably 18 seconds or more, and particularly preferably 24 seconds or more from a viewpoint of improving the value of dielectric breakdown strength at high temperature and a viewpoint of enabling efficient production of a film for a capacitor having a small heat shrinkage ratio, and is preferably 600 minutes or less, more preferably 300 minutes or less, even more preferably 200 minutes or less, further preferably 100 minutes or less, and particularly preferably 30 minutes or less in terms of enabling efficient production of a film for a capacitor having a small tan δ.

The heating device used in this heating is preferably a heating device that can raise the temperature of the atmosphere surrounding the stretched film because this makes it unnecessary for the heating device and the stretched film to be in contact. Specific examples of suitable heating devices include ovens and heating furnaces.

After a stretched film is prepared, the stretched film is subjected to the heat treatment step in order to cause crystallization of the hydrogenated dicyclopentadiene ring-opened polymer contained in the stretched film. In the heat treatment step, crystallization treatment is performed to cause crystallization of the hydrogenated dicyclopentadiene ring-opened polymer by adopting a specific temperature range while the stretched film is in a tense state with at least two edges thereof held.

The "tense state" of the stretched film is a state in which tension is acting on the stretched film. However, this tense state of the stretched film is not inclusive of a state in which the stretched film is substantially further stretched. The phrase "substantially further stretched" normally refers to the stretching ratio of the stretched film in any direction being 1.1 times or more.

In a situation in which the stretched film is held, the stretched film is held by suitable holding implements. The holding implements may be implements that can hold edges of the stretched film continuously along the entire length thereof or implements that can hold edges of the stretched film intermittently with intervals in-between. For example, an edge of the stretched film may be held intermittently by holding implements arranged at a specific interval.

In the heat treatment step, the stretched film is in a tense state with at least two edges of the stretched film being held. This prevents deformation of the stretched film due to heat shrinkage in a region between the held edges. In order to prevent deformation of a large area of the stretched film, it is preferable that edges including at least two opposing edges are held and that a region between the held edges is in a tense state. In the case of a stretched film that is a rectangular single sheet, for example, deformation of the entirety of the single-sheet stretched film can be prevented by holding two opposing edges (for example, long edges or short edges) of the stretched film with a region between the two edges in a tense state. Moreover, in the case of an elongated stretched film, deformation of the entirety of the elongated stretched film can be prevented by holding two edges at transverse direction ends of the stretched film (i.e., long edges) with a region between the two edges in a tense state. With a stretched film in which deformation is prevented in this manner, the occurrence of deformation such as wrinkling can be inhibited even when stress arises in the film due to heat shrinkage.

Holding of more edges is preferable for more reliably inhibiting deformation in the heat treatment step. Accordingly, in the case of a single-sheet stretched film, for example, it is preferable that all of the edges of the stretched film are held. As a specific example, it is preferable that four edges are held in the case of a stretched film that is a rectangular single sheet.

The holding implements that can hold edges of the stretched film are preferably implements that are not in contact with sections of the stretched film other than the edges thereof. By using such holding implements, it is possible to obtain a film for a capacitor having better smoothness. Note that known grippers can be used as the holding implements.

In the heat treatment step, the stretched film is preferably set to a temperature of not lower than the glass-transition temperature Tg of the hydrogenated dicyclopentadiene ring-opened polymer and not higher than the melting point Tm of the hydrogenated dicyclopentadiene ring-opened polymer (temperature of 150°C to 250°C) while the stretched film is in a tense state with at least two edges thereof held as described above. Crystallization of the hydrogenated dicyclopentadiene ring-opened polymer proceeds in the stretched film that is set to a temperature such as described above. Consequently, a heated and stretched film (crystallized film) containing a crystallized hydrogenated dicyclopentadiene ring-opened polymer is obtained through the heat treatment step. Since the heated and stretched film is placed in a tense state while preventing deformation thereof, crystallization can be caused to proceed without loss of smoothness of the heated and stretched film.

### <Relaxation treatment step>

The relaxation treatment step is a step of performing relaxation treatment of the stretched film that has been heated through the heat treatment step with a specific relaxation temperature and relaxation time and with a specific reduction ratio of film fixed width.

### [Relaxation temperature]

The relaxation temperature is not specifically limited but, from a viewpoint of improving the value of dielectric breakdown strength at high temperature and a viewpoint of enabling efficient production of a film for a capacitor having a small heat shrinkage ratio, the relaxation temperature is preferably 150°C or higher, more preferably 160°C or higher, even more preferably 170°C or higher, and particularly preferably 180°C or higher, and is preferably 250°C or lower, more preferably 240°C or lower, and particularly preferably 230°C or lower.

In a case in which the relaxation treatment step follows the heat treatment step without intervening cooling, the treatment temperature of the heated and stretched film in the relaxation treatment step is preferably the same as the temperature in the heat treatment step. This can inhibit non-uniformity of the temperature of the heated and stretched film in the relaxation treatment step and can increase productivity of the film for a capacitor.

### [Relaxation time]

The relaxation time is not specifically limited but is preferably 3 seconds or more, more preferably 0.1 minutes or more, even more preferably 0.2 minutes or more, further preferably 0.3 minutes or more, and particularly preferably 0.4 minutes or more in terms of enabling efficient production of a film for a capacitor having a small heat shrinkage ratio, and is preferably 600 minutes or less, more preferably 300 minutes or less, even more preferably 200 minutes or less, and particularly preferably 100 minutes or less in terms of enabling efficient production of a film for a capacitor having a small tan δ.

### [Reduction ratio of film fixed width]

With regards to the reduction ratio of film fixed width, the lengthwise reduction ratio and the widthwise reduction ratio are not specifically limited but are each preferably more than 0%, more preferably 0.2% or more, even more preferably 0.4% or more, and particularly preferably 0.6% or more in terms of enabling efficient production of a film for a capacitor having a small heat shrinkage ratio, and are each preferably 20% or less, more preferably 15% or less, even more preferably 13% or less, and particularly preferably 10% or less in terms of uniformity of the surface (planar shape) of the film.

Note that the "reduction ratio of film fixed width" is the proportion by which a holding interval of the film is narrowed in the relaxation treatment step.

The relaxation treatment step is performed after the heat treatment step in order to cause heat shrinkage of the heated and stretched film obtained through the heat treatment step and eliminate residual stress. In the relaxation treatment step, the heated and stretched film obtained through the heat treatment step is kept flat while performing relaxation treatment of relaxing tensing of the heated and stretched film in a specific temperature range.

Relaxation of tensing of the heated and stretched film refers to the release of the heated and stretched film from a tense state in which it is held by a holding device, and the heated and stretched film may still be held by the holding device so long as the heated and stretched film is not tense. Relaxation of tensing in this manner places the heated and stretched film in a state in which heat shrinkage can occur. The relaxation treatment step relieves stress that can arise in the film for a capacitor during heating by allowing heat shrinkage of the heated and stretched film to occur. Therefore, since heat shrinkage of the presently disclosed film for a capacitor in high-temperature environments can be reduced, a film for a capacitor having excellent dimensional stability in high-temperature environments is obtained.

Relaxation of tensing of the heated and stretched film may be performed all at once or may be performed over time, either continuously or stepwise. However, it is preferable that relaxation of tensing is performed continuously or stepwise in order to inhibit the occurrence of deformation such as rippling or wrinkling in the obtained film for a capacitor.

The relaxation of tensing of the heated and stretched film is performed while keeping the heated and stretched film flat. Keeping the heated and stretched film flat means that a flat plane shape of the heated and stretched film is maintained such that deformation of the heated and stretched film, such as rippling and wrinkling, does not occur. This can inhibit the occurrence of deformation such as rippling and wrinkling in the obtained film for a capacitor.

In a case in which a single-sheet heated and stretched film is subjected to relaxation treatment in the relaxation treatment step described above, a method may be adopted in which four edges of the heated and stretched film are held while narrowing the interval between held sections continuously or stepwise, for example. In this case, the interval between held sections may be narrowed simultaneously at the four edges of the heated and stretched film. Alternatively, the interval between held sections may be narrowed at some edges and the interval between held sections may subsequently be narrowed at other edges. Further alternatively, the interval between held sections may be maintained at some edges without being narrowed. Moreover, the interval between held sections may be narrowed continuously or stepwise at some edges and the interval between held sections may be narrowed all at once at other edges.

In a case in which a heated and stretched film that is elongated is subjected to relaxation treatment in the relaxation treatment step described above, a method may be adopted in which, using a tenter stretching machine, the interval between guide rails that can guide clips is narrowed in a conveyance direction of the heated and stretched film and/or the interval between adjacent clips is narrowed, for example.

In a case in which relaxation of tensing of the heated and stretched film is performed by narrowing the interval between held sections in a state in which the heated and stretched film is held as described above, the degree to which the interval is narrowed can be set in accordance with the magnitude of residual stress in the heated and stretched film that is obtained in the heat treatment step.

A large amount of stress tends to remain in a heated and stretched film obtained through implementation of the heat treatment step. Therefore, the degree of narrowing of the interval between held sections is preferably large in order to relax tensing of the heated and stretched film.

### <Other steps>

No specific limitations are placed on other steps. For example, surface treatment of the obtained film for a capacitor may be performed.

### EXAMPLES

The following provides a more specific description of the present disclosure based on examples. However, the present disclosure is not limited to the following examples.

In the following description, "%" and "parts" used in expressing quantities are by mass, unless otherwise specified. Moreover, operations described below were performed at normal temperature and normal pressure, unless otherwise specified.

Various measurements and evaluations in the examples and comparative examples were performed as follows.

### <Molecular weight (weight-average molecular weight and number-average molecular weight) of ring-opened polymer of dicyclopentadiene>

A solution containing a ring-opened polymer of dicyclopentadiene was sampled to obtain a measurement sample. The obtained measurement sample was used to determine the molecular weight of the ring-opened polymer of dicyclopentadiene as a polystyrene-equivalent value using a gel permeation chromatography (GPC) system HLC-8320 (produced by Tosoh Corporation) and an H-type column (produced by Tosoh Corporation) at a temperature of 40°C and with tetrahydrofuran as a solvent.

### <Glass-transition temperature and melting point of hydrogenated product of ring-opened polymer of dicyclopentadiene>

An obtained hydrogenated product of a ring-opened polymer of dicyclopentadiene was used as a measurement sample. The obtained measurement sample was heated to 320°C and was then rapidly cooled to room temperature at a cooling rate of -10°C/min using liquid nitrogen in a nitrogen atmosphere. A differential scanning calorimeter (DSC) was then used to heat the measurement sample at 10°C/min and to thereby determine the glass-transition temperature and the melting point of the hydrogenated product of the ring-opened polymer of dicyclopentadiene.

### <Proportion of racemo diads in hydrogenated product of ring-opened polymer of dicyclopentadiene>

An obtained hydrogenated product of a ring-opened polymer of dicyclopentadiene was used as a measurement sample. The proportion of racemo diads (meso/racemo ratio) was determined through ¹³C-NMR measurement by an inverse-gated decoupling method performed at 200°C with orthodichlorobenzene-d₄/1,2,4-trichlorobenzene-d₃ (TCB-d₃) (mixing ratio (by mass) = 1/2) as a solvent. Specifically, the proportion of racemo diads was determined from an intensity ratio of a signal at 43.35 ppm attributed to meso diads and a signal at 43.43 ppm attributed to racemo diads, with a peak at 127.5 ppm for orthodichlorobenzene-d₄ taken as a standard shift.

### <Through direction crystal long period determined by small-angle X-ray scattering>

A nanoscale X-ray structure evaluation device (NanoPIX produced by Rigaku) was used as an X-ray generator. The mode was set as two-pinhole high-flux mode, the X-ray source was set as Cu Kα radiation, the output was set as 40 kV and 30 mA, the pinholes were set as ϕ1.4 mm to ϕ0.85 mm, the camera length was set as 1,400 mm, and the exposure time was set as 600 seconds. A semiconductor detector (HyPix-6000 produced by Rigaku) was used as a detector. This detector was used to determine the scattering intensity I(q) for a scattering vector q range of 0.0085 angstroms to 1.1 angstroms.

Here, q is given by q = 4πsinθ/λ when θ is taken to be half of the scattering angle 2θ, π is taken to be the mathematical constant pi, and λ is taken to be the wavelength of X-rays.

The long period d is given by d = 2π/qmax when q at which the scattering intensity I is at a maximum is taken to be qmax.

The lamellar thickness was determined by a method described in "Chapter 5. The Semicrystalline State (page 178)" of "The Physics of Polymers" (Springer, 2007) authored by G. R. Strobl.

Specifically, a Fourier transformation of I(q) was performed to determine a one-dimensional electron density correlation function K(z) with respect to real space z. When z at which K(z) is at a minimum is taken to be zmin, and when a straight line when a linear approximation of K(z) is made for z < zmin is taken to be L1 and a tangent at K(zmin) is taken to be L2, z at an intersection point of L1 and L2 is the lamellar thickness zl.

Note that scattering from the film surface in a situation in which X-rays were incident at the film surface from a perpendicular direction was taken to be scattering for the "through direction".

### <Degree of crystallinity>

The degree of crystallinity was calculated according to the following formula using the long period d and the lamellar thickness zl that had been determined by small-angle X-ray scattering performed as described above. $Degree of crystallinity \left(%\right) = zl / d \times 100$

### <Rigid amorphous fraction>

The rigid amorphous fraction was measured by modulated differential scanning calorimetry. A differential scanning calorimeter (DSC7000X produced by Hitachi High-Tech Corporation) was used to perform measurement from 30°C to 300°C with a heating rate of 2°C/min, a modulation amplitude of ±3°C, and a modulation frequency of 0.05 Hz. The specific heat difference at the glass-transition temperature was determined, and the degree of crystallinity that had been calculated as described above was also used to calculate the rigid amorphous fraction (%) according to the following formulae. 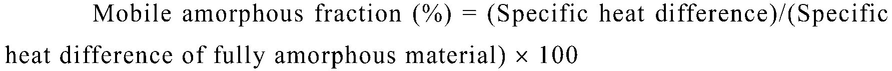 Mobile amorphous fraction (%) = (Specific heat difference)/(Specific heat difference of fully amorphous material) × 100 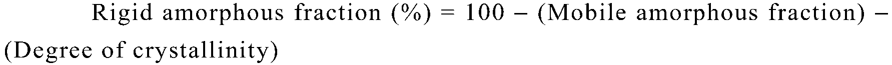 Rigid amorphous fraction (%) = 100 - (Mobile amorphous fraction) - (Degree of crystallinity)

### <Plane orientation factor>

A refractive index meter (AxoScan produced by Axometrics, Inc.) was used to measure the refractive index in MD, TD, and ND (thickness) directions (respectively denoted as Nx, Ny, and Nz), and the plane orientation factor was calculated according to the following formula. $ΔP = \left(Nx+Ny\right) / 2 - Nz$

### <Thickness (µm) of film for capacitor>

The thickness (µm) of an obtained film for a capacitor was measured using a film thickness meter (produced by Fujiwork Co., Ltd.; product name: HKT-1216).

### <Dielectric breakdown strength>

The dielectric breakdown strength at 23°C and 150°C of an obtained film for a capacitor (thickness: 3 µm) was measured in accordance with the plate electrode method described in JIS C2151:2006. Note that a dielectric breakdown voltage measurement device (YST-243-100RHO produced by Yamayo Shikenki) was used as a measurement device, and the dielectric breakdown strength was taken to be an average value of the dielectric breakdown voltage divided by the thickness of the film for a capacitor. In measurement at 150°C, the electrodes and the measurement sample were set in a hot air oven, were held therein for 10 minutes, and then the voltage was increased to perform measurement in accordance with the plate electrode method described in JIS C2151:2006 in the same way as above. The measured values are shown in Table 1. Electrical insulation of the film was also evaluated in accordance with the following standard. In overall evaluation of electrical insulation, a value determined by calculating the value of a retention ratio of the dielectric breakdown strength at 150°C relative to the dielectric breakdown strength at 23°C was also taken into account.

A film for a capacitor having an "A" evaluation according to the following standard has excellent electrical insulation over a wide temperature range and also has an advantageous characteristic that characteristic variation in response to temperature change has a low tendency to arise.

### <<Electrical insulation evaluation standard>>

A: Dielectric breakdown strength at 23°C of 500 kV/mm or more, dielectric breakdown strength at 150°C of 400 kV/mm or more, and retention ratio of 80% or more
B: Does not satisfy standard described above

### (Production Example 1: Production of hydrogenated product of ring-opened polymer of dicyclopentadiene)

A metal pressure-resistant reactor that had been internally purged with nitrogen was charged with 154.5 parts of cyclohexane as an organic solvent, 42.8 parts (30 parts in terms of dicyclopentadiene) of a cyclohexane solution (concentration: 70%) of dicyclopentadiene (endo isomer content ratio: 99% or more) as a dicyclopentadiene, and 1.91 parts of 1-hexene as a molecular weight modifier. The contents of the pressure-resistant reactor were heated to 53°C. Meanwhile, a ring-opening polymerization catalyst solution was prepared by adding 0.061 parts of an n-hexane solution (concentration: 19%) of diethylaluminum ethoxide (organometallic reducing agent) as a ring-opening polymerization catalyst to a solution obtained through dissolution of 0.014 parts of a tetrachlorotungsten phenylimide (tetrahydrofuran) complex (metal compound) as a ring-opening polymerization catalyst in 0.70 parts of toluene (organic solvent), and then performing stirring for 10 minutes. This ring-opening polymerization catalyst solution was added into the reactor, and a ring-opening polymerization reaction was carried out at 53°C for 4 hours to obtain a solution containing a dicyclopentadiene ring-opened polymer.

The polymerization reaction was stopped by adding 0.037 parts of 1,2-ethanediol as an inhibitor to 200 parts of the obtained solution containing the dicyclopentadiene ring-opened polymer and performing 1 hour of stirring at 60°C. Thereafter, 1 part of a hydrotalcite-like compound (product name: KYOWAAD^{®} 2000 (KYOWAAD is a registered trademark in Japan, other countries, or both); produced by Kyowa Chemical Industry Co., Ltd.) was added as an adsorbent, heating was performed to 60°C, and stirring was performed for 1 hour. Next, 0.4 parts of a filter aid (product name: Radiolite^{®} #1500 (Radiolite is a registered trademark in Japan, other countries, or both); produced by Showa Chemical Industry Co., Ltd.) was added, and the adsorbent was filtered off using a PP pleated cartridge filter (product name: TCP-HX; produced by Advantec Toyo Kaisha, Ltd.) to obtain a solution containing the dicyclopentadiene ring-opened polymer.

A portion of this solution was used to measure the molecular weight of the dicyclopentadiene ring-opened polymer. The weight-average molecular weight (Mw) was 28,100, the number-average molecular weight (Mn) was 8,750, and the molecular weight distribution (Mw/Mn) was 3.21.

Next, 100 parts of cyclohexane and 0.0043 parts of chlorohydridocarbonyltris(triphenylphosphine)ruthenium were added to 200 parts of the obtained solution containing the dicyclopentadiene ring-opened polymer (polymer content: 30 parts), and a hydrogenation reaction was carried out at a hydrogen pressure of 6 MPa and a temperature of 180°C for 4 hours. The reaction liquid was a slurry in which solid content had precipitated.

Solid content and solution were separated through centrifugal separation of the reaction liquid, and then the solid content was dried under reduced pressure at 60°C for 24 hours to obtain 28.5 parts of a hydrogenated product of the dicyclopentadiene ring-opened polymer. Note that the hydrogenated product of the dicyclopentadiene ring-opened polymer is denoted as "DCPD" in Table 1.

The percentage hydrogenation of unsaturated bonds in the hydrogenation reaction was 99% or more. The hydrogenated product of the dicyclopentadiene ring-opened polymer had a glass-transition temperature of 98°C and a melting point of 262°C. The proportion of racemo diads was 89%. Note that the percentage hydrogenation of the polymer was calculated through ¹H-NMR measurement performed at 145°C with orthodichlorobenzene-d₄ as a solvent.

### (Production Example 2: Production of unstretched film)

A resin for use as a film material was obtained by mixing 1.1 parts of an antioxidant (tetrakis[methylene-3-(3',5'-di-t-butyl-4'-hydroxyphenyl)propionate]methane; Irganox^{®} 1010 (Irganox is a registered trademark in Japan, other countries, or both) produced by BASF Japan Ltd.) with 100 parts of the hydrogenated product of the ring-opened polymer of dicyclopentadiene obtained in Production Example 1.

This resin was loaded into a twin-screw extruder (TEM-37B produced by Toshiba Machine Co., Ltd.) including 4 die holes having an internal diameter of 3 mm. The twin-screw extruder was used to shape a shaped product having a strand form through hot melt-extrusion of the resin. The shaped product was finely cut by a strand cutter to obtain pellets of the resin. The operating conditions of the twin-screw extruder were as follows.
- Barrel temperature setting: 270°C to 280°C
- Die temperature setting: 250°C
- Screw speed: 145 rpm
- Feeder speed: 50 rpm

Next, the obtained pellets were supplied into a hot melt-extrusion film forming machine including a T-die. The film forming machine was used to produce an elongated unstretched film of 155 mm in width (thickness of 45 µm for Examples 1 to 5; thickness of 39 µm for Example 6; thickness of 33 µm for Example 7 to Comparative Example 2) that was formed of the resin by a method in which the elongated unstretched film was wound up by a roll at a speed of 2 m/min. The operating conditions of the film forming machine were as follows. The thickness and edge length of the unstretched film were adjusted by adjusting the screw speed as appropriate.
- Barrel temperature setting: 280°C to 290°C
- Die temperature: 270°C
- Screw speed: 30 rpm

### (Example 1)

### <1-1. Stretching treatment step>

A square of 90 mm × 90 mm was cut out at an arbitrary location in the elongated unstretched film obtained in Production Example 2. This cutting was performed such that edges of the cut-out square of the unstretched film were each parallel to a lengthwise direction or a widthwise direction of the elongated unstretched film. The cut-out unstretched film was set up in a multi-tank type biaxial stretching birefringence orientation axis measurement device (produced by Eto Co., Ltd.). This multi-tank type biaxial stretching birefringence orientation axis measurement device includes a plurality of clips that can hold four edges of a film and has a structure that enables stretching of a film through movement of these clips. The multi-tank type biaxial stretching birefringence orientation axis measurement device was used to stretch the unstretched film with a stretching ratio of 3.9 times in MD corresponding to the lengthwise direction of the elongated unstretched film and subsequently with a stretching ratio of 3.9 times in TD corresponding to the widthwise direction of the elongated unstretched film (stretched with an area stretching ratio of 15.2 times) to obtain a stretched film. The operating conditions of the multi-tank type biaxial stretching birefringence orientation axis measurement device were as follows.
- Stretching rate: 200 mm/min
- Stretching temperature: 110°C

### <1-2. Heat treatment step>

The four edges of the stretched film were held by the clips of the multi-tank type biaxial stretching birefringence orientation axis measurement device so as to attach the stretched film in the multi-tank type biaxial stretching birefringence orientation axis measurement device. The stretched film was placed in a tense state by holding the four edges of the stretched film using the clips. The stretched film was then subjected to heat treatment in an oven at 220°C for 5 seconds to perform a crystallization step of crystallizing the hydrogenated product of the ring-opened polymer of dicyclopentadiene contained in the stretched film to obtain a heated and stretched film.

Upon measurement of haze of the heated and stretched film that had been obtained, the haze was 0.36%.

### <1-3. Relaxation treatment step>

The four edges of the heated and stretched film obtained in this manner were held by the clips of the multi-tank type biaxial stretching birefringence orientation axis measurement device so as to attach the heated and stretched film in the multi-tank type biaxial stretching birefringence orientation axis measurement device. A relaxation treatment step of relaxing tensing of the heated and stretched film (crystallized film) at a temperature of 220°C while keeping the heated and stretched film flat was performed to obtain a film for a capacitor. In the relaxation treatment step, tensing of the heated and stretched film was relaxed by moving the clips of the multi-tank type biaxial stretching birefringence orientation axis measurement device in an in-plane direction of the heated and stretched film so as to reduce the inter-clip distance. The inter-clip distance was reduced by 3% in the lengthwise direction of the heated and stretched film and 3% in the widthwise direction of the heated and stretched film over 5 seconds.

Various attributes of the film for a capacitor that had been obtained in this manner were measured or evaluated by the previously described methods.

### (Example 2)

Operations, measurements, and evaluations were performed in the same way as in Example 1 with the exception that instead of mixing 1.1 parts of the antioxidant with 100 parts of the hydrogenated product of the ring-opened polymer of dicyclopentadiene in "Production of unstretched film", 1.1 parts of the antioxidant and 0.05 parts of an anti-blocking agent (silica particles (average particle diameter: 300 nm; produced by Nippon Shokubai Co., Ltd.; product name: SEAHOSTAR KE-S30)) were mixed with 100 parts of the hydrogenated product of the ring-opened polymer of dicyclopentadiene in "Production of unstretched film". The results are shown in Table 1.

### (Example 3)

Operations, measurements, and evaluations were performed in the same way as in Example 1 with the exception that the temperature in both "1-2. Heat treatment step" and "1-3. Relaxation treatment step" was changed to 240°C. The results are shown in Table 1.

### (Example 4)

Operations, measurements, and evaluations were performed in the same way as in Example 1 with the exception that the temperature in both "1-2. Heat treatment step" and "1-3. Relaxation treatment step" was changed to 180°C. The results are shown in Table 1.

### (Example 5)

Operations, measurements, and evaluations were performed in the same way as in Example 1 with the exception that the temperature in both "1-2. Heat treatment step" and "1-3. Relaxation treatment step" was changed to 250°C. The results are shown in Table 1.

### (Example 6)

A film produced with a thickness of 39 µm was used as an unstretched film. Operations, measurements, and evaluations were performed in the same way as in Example 3 with the exception that stretching was performed with a stretching ratio of 3.6 times in MD and a stretching ratio of 3.6 times in TD (stretching with an area stretching ratio of 13.0 times) in "1-1. Stretching treatment step". The results are shown in Table 1.

### (Example 7)

A film produced with a thickness of 33 µm was used as an unstretched film. Operations, measurements, and evaluations were performed in the same way as in Example 1 with the exception that stretching was performed with a stretching ratio of 3.3 times in MD and a stretching ratio of 3.3 times in TD (stretching with an area stretching ratio of 10.9 times) in "1-1. Stretching treatment step". The results are shown in Table 1.

### (Example 8)

Operations, measurements, and evaluations were performed in the same way as in Example 7 with the exception that the temperature in both "1-2. Heat treatment step" and "1-3. Relaxation treatment step" was changed to 180°C. The results are shown in Table 1.

### (Comparative Example 1)

A film produced with a thickness of 33 µm was used as an unstretched film. Operations, measurements, and evaluations were performed in the same way as in Example 1 with the exception that stretching was performed with a stretching ratio of 3.6 times in MD and a stretching ratio of 3.6 times in TD (stretching with an area stretching ratio of 13.0 times) in "1-1. Stretching treatment step", and the temperature in both "1-2. Heat treatment step" and "1-3. Relaxation treatment step" was changed to 250°C. The results are shown in Table 1.

### (Comparative Example 2)

A film produced with a thickness of 33 µm was used as an unstretched film. Operations, measurements, and evaluations were performed in the same way as in Example 1 with the exception that stretching was performed with a stretching ratio of 3.3 times in MD and a stretching ratio of 3.3 times in TD (stretching with an area stretching ratio of 10.9 times) in "1-1. Stretching treatment step", and the temperature in both "1-2. Heat treatment step" and "1-3. Relaxation treatment step" was changed to 240°C. The results are shown in Table 1.

**[Table 1]**

| | | | Units | Example | | | | | | | | Comparative Example | |
|---|---|---|---|---|---|---|---|---|---|---|---|---|---|
| | | | | 1 | 2 | 3 | 4 | 5 | 6 | 7 | 8 | 1 | 2 |
| Unstretched film | Resin | | - | DCPD | DCPD | DCPD | DCPD | DCPD | DCPD | DCPD | DCPD | DCPD | DCPD |
| | Resin melting point | | °C | 262 | 262 | 262 | 262 | 262 | 262 | 262 | 262 | 262 | 262 |
| | Additive amount of silica | | phr | 0 | 0.05 | 0 | 0 | 0 | 0 | 0 | 0 | 0 | 0 |
| | Thickness of unstretched film | | µm | 45 | 45 | 45 | 45 | 45 | 39 | 33 | 33 | 33 | 33 |
| Stretching treatment | MD stretching ratio | | Times | 3.9 | 3.9 | 3.9 | 3.9 | 3.9 | 3.6 | 3.3 | 3.3 | 3.6 | 3.3 |
| | TD stretching ratio | | Times | 3.9 | 3.9 | 3.9 | 3.9 | 3.9 | 3.6 | 3.3 | 3.3 | 3.6 | 3.3 |
| | Area stretching ratio | | (Times)² | 15.2 | 15.2 | 15.2 | 15.2 | 15.2 | 13.0 | 10.9 | 10.9 | 13.0 | 10.9 |
| | Film thickness after stretching | | µm | 3 | 3 | 3 | 3 | 3 | 3 | 3 | 3 | 3 | 3 |
| | Stretching temperature | | °C | 110 | 110 | 110 | 110 | 110 | 110 | 110 | 110 | 110 | 110 |
| Heat treatment step | Heating temperature | | °C | 220 | 220 | 240 | 180 | 250 | 240 | 220 | 180 | 250 | 240 |
| | Heating time | | s | 5 | 5 | 5 | 5 | 5 | 5 | 5 | 5 | 5 | 5 |
| Relaxation treatment step | Relaxation temperature | | °C | 220 | 220 | 240 | 180 | 250 | 240 | 220 | 180 | 250 | 240 |
| | Relaxation time | | s | 5 | 5 | 5 | 5 | 5 | 5 | 5 | 5 | 5 | 5 |
| | Reduction ratio | Lengthwise | % | 3 | 3 | 3 | 3 | 3 | 3 | 3 | 3 | 3 | 3 |
| | | Widthwise | % | 3 | 3 | 3 | 3 | 3 | 3 | 3 | 3 | 3 | 3 |
| Attributes | Crystal long period | | Angstroms | 95 | 95 | 109 | 96 | 119 | 118 | 119 | 111 | 123 | 121 |
| | Rigid amorphous fraction | | % | 34 | 34 | 34 | 14 | 34 | 13 | 5 | 3 | 12 | 5 |
| | Plane orientation factor | | - | 0.013 | 0.013 | 0.013 | 0.013 | 0.013 | 0.012 | 0.012 | 0.012 | 0.012 | 0.012 |
| | Dielectric breakdown strength (23°C) | | kV/mm | 603 | 601 | 550 | 588 | 500 | 487 | 500 | 501 | 452 | 450 |
| | Dielectric breakdown strength (150°C) | | kV/mm | 490 | 499 | 500 | 476 | 482 | 466 | 432 | 402 | 441 | 433 |
| | Retention ratio | | % | 81 | 83 | 91 | 81 | 96 | 96 | 86 | 80 | 98 | 96 |
| Evaluation | Electrical insulation evaluation | | - | A | A | A | A | A | A | A | A | B | B |

It can be seen from Table 1 that when a crystalline hydrogenated dicyclopentadiene ring-opened polymer was included and when the crystal structure thereof was controlled such as to satisfy a prescribed attribute, it was possible to increase the value of dielectric breakdown strength at normal temperature and high temperature. In contrast, it can be seen that the value of dielectric breakdown strength at normal temperature and high temperature could not be increased in a good balance in Comparative Examples 1 and 2 in which the through direction crystal long period as determined by small-angle X-ray scattering exceeded 120 angstroms.

### INDUSTRIAL APPLICABILITY

According to the present disclosure, it is possible to provide a film for a capacitor having a high value of dielectric breakdown strength at normal temperature and high temperature.

## Claims

1. A film for a capacitor comprising a hydrogenated dicyclopentadiene ring-opened polymer that is crystalline, wherein the film for a capacitor has a through direction crystal long period of 120 angstroms or less as determined by small-angle X-ray scattering.

2. The film for a capacitor according to claim 1, wherein the film for a capacitor has a rigid amorphous fraction of 3% or more.

3. The film for a capacitor according to claim 1, wherein the film for a capacitor has a dielectric breakdown strength at 150°C of 400 kV/mm or more.

4. The film for a capacitor according to claim 1, wherein the film for a capacitor has a plane orientation factor of 0.010 or more.

5. The film for a capacitor according to claim 1, comprising silica particles as an anti-blocking agent.

6. A method of producing a film for a capacitor that is a method of producing the film for a capacitor according to any one of claims 1 to 5, comprising performing stretching treatment of an unstretched film under conditions of a stretching temperature of not lower than a glass-transition temperature Tg of the hydrogenated dicyclopentadiene ring-opened polymer and not higher than a melting point Tm of the hydrogenated dicyclopentadiene ring-opened polymer and an area stretching ratio of not less than 1.5 times and not more than 20.0 times.

7. The method of producing a film for a capacitor according to claim 6, comprising:
performing heat treatment of a stretched film that has been stretched through the stretching treatment under conditions of a heating temperature of not lower than 150°C and not higher than 240°C and a heating time of not less than 0.05 minutes and not more than 600 minutes; and
performing relaxation treatment of the stretched film that has been heated through the heat treatment under conditions of a relaxation temperature of not lower than 150°C and not higher than 240°C and a relaxation time of not less than 0.05 minutes and not more than 600 minutes and with a reduction ratio of film fixed width of more than 0% and not more than 20%.

8. A capacitor comprising the film for a capacitor according to any one of claims 1 to 5.

9. A film comprising a hydrogenated dicyclopentadiene ring-opened polymer that is crystalline, wherein the film has a through direction crystal long period of 120 angstroms or less as determined by small-angle X-ray scattering.
